# EUROPEAN PATENT SPECIFICATION

(11) **EP 1 632 527 B1**
(45) Date of publication and mention of the grant of the patent: **31.10.2007**
(21) Application number: 05016341.9
(22) Date of filing: 27.07.2005
(51) Int. Cl.: C08L 9/00, B60C 1/00, C08K 3/04, C08K 3/36

(54) **Pneumatic tire**
Luftreifen
Pneumatique

(30) Priority: 07.09.2004 JP 2004259749
(43) Date of publication of application: 08.03.2006
(73) Proprietor: SUMITOMO RUBBER INDUSTRIES, LTD., Kobe-shi, Hyogo-ken (JP)
(72) Inventor: Minakoshi, Akira, Sumitomo Rubber Industries, Ltd., Kobe-shi Hyogo-ken (JP)
(74) Representative: Manitz, Finsterwald & Partner GbR

(56) References cited:
- EP-A- 0 673 792
- EP-A- 0 881 255
- EP-A- 1 026 010
- EP-A- 1 297 973
- EP-A- 1 384 600
- US-A- 5 351 734
- US-A- 5 393 821
- ANONYMOUS: INTERNET ARTICLE, [Online] XP002360711 Retrieved from the Internet: URL:http://www.tokaicarbon.co.jp/en/produc ts/seast.shtml> [retrieved on 2005-12-22]

## Description

The present invention relates to a pneumatic tire, particularly a pneumatic tire used on the icy and snowy road.

Spike tires were used or chains were mounted on tires for using on the icy and snowy road. Since there arose an environmental problem of mine dusts, studless tires were developed as tires for the icy and snowy road instead of spike tires and chains.

Studless tires are slippery on the icy and snowy road, as the friction coefficient thereof is significantly lower than normal roads, and various attempts have been made to improve studless tires from the viewpoints of material and design, since studless tires are insufficient in friction on the icy and snowy road comparing with spike tires.

To improve friction of studless tires on the icy and snowy road, various processes have been adopted, for example, a process of containing a powdered rubber with a low degree of hardness which shows an excellent property at low temperature (excellent in a property of low temperature), a process of containing an inorganic filler having the scratching effect to ice, and a process of lowering the hardness of a rubber by containing a large amount of a softening agent such as an oil. However, these processes have difficulties in achieving compatibility of friction and abrasion resistance, since friction and abrasion resistance of tires on the icy and snowy road are in a relationship of trade-off.

Japanese Unexamined Patent Publication No. 2000-129038 discloses studless tires which employ a rubber composition containing a carbon black having silica and a particle processed article for a tread, but the studless tires were insufficient in compatibility of friction and abrasion resistance.

EP 0 673 792 A1 discloses a pneumatic tire in which a foamed rubber layer having closed cells is provided at a surface of a tire tread, wherein the foamed rubber layer has closed cells and wherein a solid-phase rubber portion of the foamed rubber layer contains a rubber composition containing a diene-type rubber and between 10 and 80 parts by weight of silica based on 100 parts by weight of the diene-type rubber.

US 5,351,734 describes a pneumatic tire comprising a tread portion including as at least a portion of its outer surface a foamed rubber being formed of a rubber composition consisting essentially of at least one rubber component having a glass transition point of not higher than -60°C.

EP 1 384 600 A2 and EP 1 297 973 A1 disclose a rubber composition containing, based on 100 parts by weight of a diene rubber, fibers having an average fiber diameter of 10 to 100 µm and an average fiber length of 0.01 to 4 mm and 1 to 10 parts by weight of particles having a Moh's hardness of at least 5 and an average particle size of at most 500 µm.

EP 1 026 010 A2 discloses a rubber composition comprising natural rubber, carbon black and silica.

EP 0 881 255 A2 discloses a rubber composition comprising a diene base rubber comprising at least 15 % by weight of a polybutadiene rubber, 10 to 80 parts by weight of silica and a silane coupling agent.

The object of the present invention is to provide a pneumatic tire, in which friction and abrasion resistance are compatible on the icy and snowy road.

The present invention relates to a pneumatic tire having a part of a tread comprising a rubber composition having at most 1 part by weight of a vulcanizing agent and less than 5 parts by weight of silica and carbon black of which iodine adsorption is at least 100 g/kg and oil absorption of 24M4dibutyl phthalate is at least 90 ml/ 100g, based on 100 parts by weight of a diene rubber containing at least 50 % by weight of a polybutadiene rubber, having at least 95 % of the amount of *cis*-1,4 bond, wherein the total amount of the silica and the carbon black is 30 to 40 parts by weight, and wherein the hardness of the rubber composition is 35 to 47 at 0°C.

According to the present invention, a pneumatic tire in which friction and wear resistance are compatible on the icy and snowy road can be obtained by composing a tread with a rubber composition containing a particular polybutadiene rubber, particular carbon black and silica and at most 1 part by weight of a vulcanizing agent, and lowering the hardness therof.

A pneumatic tire of the present invention has a part of a tread.

A part of a tread can be a one-layered structure or a two-layer structure composed by a cap tread and a base tread. The pneumatic tire of the present invention is preferably a two-layer structure since it is inadvantageous in steerability such as handling due to extremely low hardness of 35 to 47 at 0°C.

A part of a tread of the present invention comprises a rubber composition comprising a diene rubber and a filler.

The diene rubber comprises polybutadiene (high cis BR) containing many cis-1,4bonds.

The amount of cis1,4 bond in high cis BR is at least 95 % and preferably at least 96 %. When the amount of cis1,4 bond is less than 95 %, a property at low temperature and abrasion resistance are inferior. High cis BR is excellent in a property at low temperature and abrasion resistance.

The amount of cis-1,4 bond in a diene rubber is 50 % by weight and preferably at least 60 % by weight. When the is less than 50 % by weight, effects of a property at low temperature and abrasion resistance can not be obtained sufficiently.

As a diene rubber, a natural rubber (NR), a polybutadiene rubber containing less than 95 % of 1,4 bond (low cis BR), isoprene (IR), a styrenbutadiene rubber and an acrylonitrilebutadiene rubber (NBR) can be employed other than high cis BR.

The above rubber composition contains a filler comprising silica and carbon black.

There is not particular limitation for silica, and silica prepared by a wet process (wet silica) or silica prepared by a dry process (dry silica) can be employed.

The amount of silica in the above rubber composition is less than 5 parts by weight based on 100 parts by weight of a diene rubber. When the amount of silica is more than 5 parts by weight, processability is degraded and abrasion resistance becomes low.

Iodine adsorption amount of carbon black is at least 100 g/kg. When the iodine adsorption amount is less than 100 g/kg, abrasion resistance becomes low.

24M4dibutyl phthalate oil absorption of carbon black is at least 90ml/100g. When 24M4DBP oil absorption is less than 90 ml/100 g, abrasion resistance becomes low. Herein, 24M4DBP oil absorption is oil absorption of dibutyl phthalate according to JIS K6217-4, which is measured under the condition in which an operation of pressuring carbon black for 1 second at 165 MPa is repeated four times.

The amount of the above carbon black in the rubber composition is preferably at least 25 parts by weight based on 100 parts by weight of diene rubbers, and more preferably at least 30 parts by weight. When the amount of the carbon black is less than 25 parts by weight, reinforcability of the rubber is insufficient and the wear resistance becomes low. The amount of the carbon black is preferably at most 40 parts by weight. When the amount of the carbon black is more than 40 parts by weight, abrasion resistance becomes low since the rubber becomes hard and adherence of a rubber for unevenness on the surface of the icy and snowy road becomes low.

The total amount of carbon black and silica in the above rubber composition is at least 30 parts by weight based on 100 parts by weight of a diene rubber. When the amount is less than 30 parts by weight, abrasion resistance becomes low. The total amount is at most 40 parts by weight. When the total amount is more than 40 parts by weight, a friction property is degraded since the rubber becomes hard and adherence of a rubber for unevenness on the surface of the icy and snowy road becomes low. By specifying the amount of carbon black which is excellent in abrasion resistance and silica, a pneumatic tire with an excellent abrasion resistance can be provided even though the hardness is low.

Except for carbon black and silica, as the above mentioned filler, clay, alumina, talc, calcium carbonate, magnesium carbonate, aluminum hydroxide, and whisker can be contained.

To the above rubber composition, a silane coupling agent can be compounded as well as usage of silica.

To the above rubber composition, other than diene rubber, a filler and a silane coupling agent, a softening agent such as an oil, a vulcanizing agent such as sulfur, an antioxidant, a wax, stearic acid, zinc oxide, and a vulcanizing accelerator can be compouneded.

As a softening agent, usual ones such as a process oil are used, and these may be used solely or in a combination use of two or more thereof.

As a vulcanizing agent, usual ones such as sulfur are used, and these may be used solely or in a combination use of two or more thereof.

The amount of the vulcanizing agent is at most 1 part by weight based on 100 parts by weight of a diene rubber. When the amount is more than 1 part by weight, a friction property tends to decrease as adherence of a tire for the unevenness on the icy and snowy road becomes poor since the hardness of the rubber compound increases. Also, the hardness of the rubber composition increases as the vulcanizing agent such as sulfur re-crosslinks by change of tire traveling and aging.

The hardness of the above mentioned rubber composition at 0°C is at least 35 and preferably at least 38. When the hardness is less than 35, steerability is poor and also abrasion resistance can not be obtained since the rubber is too soft. Also, the hardness is at most 47 and preferably at most 45. When the hardness is more than 47, a friction property becomes low since adherence of a tire for the unevenness on the icy and snowy road becomes degraded. Since an extremely low hardness of the above rubber composition is 35 to 47 at 0°C, adherence of the rubber for the unevenness on the icy and snowy road is good and a friction property becomes excellent.

The above rubber composition is molded into a part of a tread by a conventional process. Namely, the tread can be obtained by kneading the compounded diene rubber, carbon black and silica, and if necessary, a silane coupling agent, a softening agent, a vulcanizing agent, an antioxidant, wax, stearic acid, zinc oxide and a vulcanization accelerator in a banbury mixer and an open roll, and molding a tread form on the tire molding machine.

In case of employing the above rubber composition as a cap tread in a part of a tread of the two-layer structure, a cap tread can be obtained by kneading in the same manner as in the above mentioned process.

The pneumatic tire of the present invention is prepared by vulcanizing an unvalcanized tire obtained by laminating the above tread or a cap tread to an each part of a tire.

Hereinafter, the present invention is explained in detail based on Examples.

Various chemicals used in Examples are described below. NR: RSS#3
BR1: UBEPOL-BR150B (amount of cis-1,4 bond: 96 %) available from Ube Industries, Ltd.
BR2: ASADENE-BRNF50R (amount of cis-1,4 bond: 35 %) available from ASAHI KASEI CORP.
Carbon black1: Seast9 (iodine adsorption: 140 g/kg, 24M4DBP oil
absorption: 97ml/ 100g) available from Tokai Carbon Co., Ltd.
Carbon black2: Seast3 (iodine adsorption: 80 g/kg, 24M4DBP oil
absorption: 87ml/100g) available from Tokai Carbon Co., Ltd.
Silica: Ultrasil VN3 available from Degussa Japan Co., Ltd.
Silane coupling agent: Si69 available from Degussa Japan Co., Ltd.
Oil: Diana Process Oil available from Idemitsu Kosan Co., Ltd.
Wax: SUNNOC Wax available from Ouchi Shinko Chemical Industrial Co., ltd.
Antioxidant: NOCRAC 6C (N-1,3-dimethylbutyl-N'-phenyl-p-phenylenediamine) available from Ouchi Shinko Chemical Industries Co., Ltd.
Stearic acid: Stearic acid available from NOF Corporation
Zinc oxide: Zinc Oxide type 1 available from Mitsui Mining and Smelting Co., Ltd.
Sulfur: Powdery sulfur available from Tsurumi Chemicals Co., Ltd.
Vulcanization accelerator: Nocceler CZ (N-cyclohexyl-2-benzothiazyl-sulfenamide) available from Ouchi Shinko Chemical Industrial Co., Ltd.

### EXAMPLES 1 to 3 and COMPARATIVE EXAMPLES 1 to 6

### (Preparation of a test sample)

According to the components in Table 1, various chemicals other than sulfur and the vulcanization accelerator were kneaded in a banbury mixer, and then the kneaded compound was obtained by kneading in an open roll adding the sulfur and the vulcanization accelerator. The test sample was prepared by vulcanizing the obtained kneaded compound (vulcanization temperature: 175°C, vulcanization time: 10 minutes). The hardness of the rubber was measured by using the obtained test sample as showing below.

### (Measurement of hardness of rubber)

According to JIS-K6253, the hardness of the test sample at 0°C was measured by using JIS-A hardness scale.

### (Preparation of tire)

According to the components in Table 1, various chemicals other than sulfur and the vulcanization accelerator were kneaded in a banbury mixer, and then the kneaded compound was obtained by kneading in a banbury mixer adding sulfur and the vulcanization accelerator. The obtained kneaded compound was molded into a cap tread on the tire molding machine and a 195/65R15 size tire was prepared by vulcanizing an unvulcanized tire obtained by laminating with other parts of the tire. The following tests were conducted for the prepared tire.

### (Friction properties on icy and snowy road)

The tire was mounted on a Japanese FR automobile with an engine size of 2000 cc and the breaking distance at a speed of 30 km/h on a plate of ice was measured. The results were respectively represented as an index based on the value of Example 1 as 100. The larger the index is, the better friction properties.

### (Abrasion resistance)

The above mentioned tire was mounted on a Japanese FR automobile with an engine size of 2000 cc, and the abrasion after traveling 30,000 km was measured. The results were respectively represented as an index based on the value of Example 1 as 100. The larger the index is, the better the abrasion resistance.

The results are respectively represented in Table 1.

**TABLE 1**

| | Ex. | | | Com. Ex. | | | | | |
|---|---|---|---|---|---|---|---|---|---|
| | 1 | 2 | 3 | 1 | 2 | 3 | 4 | 5 | 6 |
| Composition (parts by weight) | | | | | | | | | |
| NR | 40 | 40 | 20 | 40 | 40 | 40 | 40 | 70 | 40 |
| BR1 | 60 | 60 | 80 | - | 60 | 60 | 60 | 30 | 60 |
| BR2 | - | - | - | 60 | - | - | - | - | - |
| Carbon black 1 | 35 | 37 | 30 | 35 | - | 35 | 35 | 35 | 20 |
| Carbon black 2 | - | - | - | - | 35 | - | - | - | - |
| Silica | 3 | 3 | - | 3 | 3 | 3 | 3 | 3 | 20 |
| Silane coupling agent | 0.3 | 0.3 | - | 0.3 | 0.3 | 0.3 | 0.3 | 0.3 | 2 |
| Oil | 20 | 20 | 20 | 20 | 20 | 8 | 20 | 20 | 20 |
| Wax | 2 | 2 | 2 | 2 | 2 | 2 | 2 | 2 | 2 |
| Antioxidant | 2 | 2 | 2 | 2 | 2 | 2 | 2 | 2 | 2 |
| Stearic acid | 2 | 2 | 2 | 2 | 2 | 2 | 2 | 2 | 2 |
| Zinc oxide | 3 | 3 | 3 | 3 | 3 | 3 | 3 | 3 | 3 |
| Sulfur | 0.8 | 1 | 0.6 | 0.8 | 0.8 | 0.8 | 1.5 | 0.8 | 0.8 |
| Vulcanization accelerator | 1.5 | 1.5 | 1.5 | 1.5 | 1.5 | 1.5 | 1.5 | 1.5 | 1.5 |

| Evaluation results | | | | | | | | | |
|---|---|---|---|---|---|---|---|---|---|
| Rubber hardness | 44 | 47 | 39 | 44 | 43 | 50 | 50 | 44 | 45 |
| Friction on ice | 108 | 106 | 120 | 100 | 105 | 88 | 90 | 96 | 112 |
| Abrasion resistance | 112 | 118 | 102 | 100 | 92 | 124 | 120 | 95 | 98 |

## Claims

1. A pneumatic tire having a part of a tread comprising a rubber composition containing at most 1 part by weight of a vulcanizing agent and less than 5 parts by weight of silica based on 100 parts by weight of a diene rubber containing at least 50 % by weight of a polybutadiene rubber having at least 95 % of cis-1,4 bond and carbon black in which the iodine adsorption is at least 100g/kg and 24M4 dibutyl phthalate oil absorption is at least 90ml/100g, wherein the total amount of the silica and the carbon black is 30 to 40 parts by weight,
and wherein the hardness of the above rubber composition at 0°C is 35 to 47.

## Patentansprüche

1. Luftreifen mit einem Teil einer Lauffläche enthaltend eine Gummizusammensetzung, welche maximal 1 Gewichtsteil eines Vulkanisierungsmittels und weniger als 5 Gewichtsteile Silica bezogen auf 100 Gewichtsteile eines wenigstens 50 Gew.-% eines Polybutadienkautschuks mit wenigstens 95% cis-1,4-Bindungen enthaltenden Dienkautschuks sowie Ruß mit einer Iodabsorption von wenigstens 100 g/kg und einer 24M4 Dibutylphthalatölabsorption von wenigstens 90 ml/100 g enthält, wobei die Gesamtmenge des Silicas und des Rußes zwischen 30 und 40 Gewichtsteilen beträgt, und wobei die Härte der vorstehenden Gummizusammensetzung bei 0°C 35 bis 47 beträgt.

## Revendications

1. Bandage pneumatique comportant une partie d'une bande de roulement comprenant une composition de caoutchouc contenant au plus 1 partie en poids d'un agent de vulcanisation et moins de 5 parties en poids de silice sur la base de 100 parties en poids d'un caoutchouc de diène contenant au moins 50 % en poids d'un caoutchouc de poly(butadiène) ayant au moins 95 % de liaison cis-1,4 et du noir de carbone dans lequel l'adsorption d'iode est d'au moins 100 g/kg et l'absorption d'huile de phtalate de dibutyle 24M4 est d'au moins 90 mL/100 g, dans lequel la quantité totale de la silice et du noir de carbone est de 30 à 40 parties en poids,
et dans lequel la dureté de la composition de caoutchouc ci-dessus à 0 °C est de 35 à 47.
